# EUROPÄISCHE PATENTSCHRIFT

(11) **EP 0 802 130 B1**
(45) Veröffentlichungstag und Bekanntmachung des Hinweises auf die Patenterteilung: **28.06.2000**
(21) Anmeldenummer: 96105929.2
(22) Anmeldetag: 16.04.1996
(51) Int. Cl.: B65G 35/00

(54) **Transportsystem**
Transport system
Système de transport

(43) Veröffentlichungstag der Anmeldung: 22.10.1997
(73) Patentinhaber: SCHÜCO International KG, 33609 Bielefeld (DE)
(72) Erfinder: Diekmann, Bernd, Dipl.-Ing., 33790 Halle/Westf. (DE); Hettwer, Guido, Dipl.-Ing., 49086 Osnabrück (DE)
(74) Vertreter: Stracke, Alexander, Dipl.-Ing.

(56) Entgegenhaltungen:
- FR-A- 2 318 769
- US-A- 3 534 690
- US-A- 3 828 687

## Beschreibung

Die Erfindung betrifft ein Transportsystem für Fertigungseinrichtungen, Lagereinrichtungen und dergleichen mit einer ortsfesten, nach einem Koordinatensystem verlaufenden Führungsschiene und einer darauf gesteuert verfahrbaren Transporteinheit, die im wesentlichen aus zwei im Abstand zueinander bestehenden Laufwagen besteht, wobei jeder Laufwagen mit einer die Führungsschiene kontaktierenden Laufrollenanordnung ausgerüstet ist und mit einem Antrieb für die Transporteinheit, der im wesentlichen aus wenigstens einem an der Führungsschiene festgelegten, druckbeaufschlagbaren und flexiblen Schlauch und einer jedem Schlauch zugeordneten, an einem Wagen der Transporteinheit frei drehbar gelagerten, den Schlauch dichtend abquetschenden Antriebsrolle besteht.

Bei dem in Rede stehenden Transportsystems kann auf einer Führungsschiene eine Vielzahl von aus den einzelnen Laufwagen gebildete Transporteinheiten angeordnet sein. Der Antrieb des jeweiligen Transportsystemes erfolgt üblicherweise durch Beaufschlagung des Schlauches mit Druckluft. Da die Antriebsrolle den Schlauch dichtend abquetscht, wird der Laufwagen bzw. die Transporteinheit durch die durch den Druck erzeugte Kraft verfahren. Durch Veränderung des Druckes ändert sich die Kraft, so daß auch die Geschwindigkeit geregelt werden kann. Zur Positionierung der Transporteinheit kann in dem drucklosen Teil des Schlauches mittels eines Ventils die Geschwindigkeit und die Vortriebskraft geregelt werden. Außerdem kann durch Verschließen des Ventils der Vortrieb gestoppt werden. Es ist jedoch auch möglich, einen geringeren Druck in dem hinter den Antriebsrollen liegenden Teil des Schlauches aufzubringen. Die Regelung kann dann über die Druckdifferenz erfolgen. Ferner ist es möglich, über den Druck in dem vor den Antriebsrollen liegenden Teil des Schlauches die Transporteinheit zu regeln. Mit diesem Antriebssystem läßt sich die Transporteinheit exakt positionieren, so daß sie beispielsweise auch in Bearbeitungszentren eingesetzt werden kann. Ferner ist die Lösung preiswert und wartungsarm. Bei den bisher bekannten Transportsystemen verläuft die Führungsschiene geradlinig unter Überwindung höhenmäßiger Unterschiede, d. h. die Führungsschiene kann nur in einer vertikalen Ebene verlaufen.

Der vorliegenden Erfindung liegt die Aufgabe zugrunde, ein Transportsystem der eingangs näher beschriebenen Art so auszugestalten, daß jeder Punkt einer Fertigungseinrichtung oder einer Lagerstätte erreicht werden kann.

Die gestellte Aufgabe wird gelöst, indem die Führungsschiene U- oder C-förmig ausgebildet ist und nach einem räumlichen Koordinatensystem verläuft und abstandsgleich zu den beiden Außenstegen mit einem zur gleichen Seite gerichteten Mittelsteg versehen ist, daß an beiden Seiten des Mittelsteges jeweils ein druckbeaufschlagbarer Schlauch und jeweils eine Antriebsrolle vorgesehen ist, und daß die Rollenanordnung eines Laufwagens aus zwei Laufrollen besteht, wobei an jedem Randsteg der Profilschiene eine Laufrolle derart gelagert ist, daß die Drehachsen der Antriebsrollen in der gedachten Verbindung der beiden Drehachsen der Laufrollen liegen oder daß der Laufwagen mit vier paarweise an beiden Längsseiten gelagerten Laufrollen ausgestattet ist und die Drehachsen der vorderen und hinteren Laufrollen im gleichen Versatz zu den Drehachsen der Antriebsrollen stehen.

Durch die Verwendung von zwei Antriebsrollen und zwei Schläuchen in Verbindung mit dem mittigen Mittelsteg der Führungsschiene ist die gesamte Antriebskraft recht hoch. Durch die Verwendung einer U- oder C-förmigen Führungsschiene können die Laufrollen und die Antriebsrollen so angeordnet werden, daß die Drehachsen so zueinander liegen, daß auch eine Bewegung längs der Führungsbahn möglich ist, die nach einem räumlichen Koordinatensystem gebogen ist, d. h. es können nicht nur Bögen zur Überwindung von Höhenunterschieden überwunden werden, sondern auch Kurven in Horizontalebenen und dazu schräg stehenden Ebenen. Dadurch läßt sich jeder Punkt einer Fertigungshalle oder eines Lagers erreichen. Außerdem wird ein reibungsgeminderter störungsfreier Ablauf einer Transporteinheit auf der Führungsschiene erreicht.

In einfachster Ausführung ist vorgesehen, daß die Rollenanordnung eines Laufwagens aus zwei Laufrollen besteht, wobei an jedem Außensteg der Profilschiene eine Laufrolle derart gelagert ist, daß die Drehachsen der Antriebsrolle in der gedachten Verbindung der beiden Drehachsen der Laufrollen liegen. In Längsrichtung der Führungsschiene gesehen liegen dann die Drehachsen der Antriebsrollen und der Laufrollen auf gleicher Höhe.

Auf gleicher Höhe liegen dann auch die Längsachsen der Lagerbolzen für die Schwenklagerstege. Zur exakteren Führung kann es jedoch auch zweckmäßig sein, daß die Rollenanordnung eines Laufwagens aus vier Laufrollen besteht, wobei an jedem Außensteg der Profilschiene zwei Laufrollen derart im Abstand zueinander gelagert sind, daß die gedachte Verbindung der Drehachsen der Antriebsrollen mittig zwischen den gedachten Verbindungen der Laufrollen der gleichen Querebene beider Seiten liegen.

Zweckmäßigerweise ist die Führungsschiene, bezogen auf die Mittellängsebene des Mittelsteges symmetrisch ausgebildet. Zur einfachen Montage einer aus aneinandergereihten und verbundenen Führungsschiene gebildeten Führungsbahn ist vorgesehen, daß an dem die beiden Außenschenkel verbindenden Verbindungssteg der Führungsschiene an der dem Mittelsteg angewandten Seite sich in Längsrichtung erstreckende Systemnuten zur Befestigung der Führungsschiene auf einem Untergestell vorgesehen sind.

Zur exakten Führung der Laufrollen der Laufrolleneinheiten ist vorgesehen, daß an den Außenstegen der Führungsschiene, vorzugsweise an den Außenflächen, an den freien Rändern der Außenstege in Längsrichtung der Führungsschiene sich erstrekkende Prismenleisten zur Führung der Laufwagen angesetzt sind. Die Prismenleisten können einstückig mit den Außenschenkeln sein.

Da die Führungsbahn aus einer Vielzahl von aneinandergereihten Führungsschienen zusammengesetzt ist, ist zur genauen Positionierung vorgesehen, daß jede Führungsschiene zumindest in den Endbereichen mit mindestens zwei sich in Längsrichtung erstreckenden Justierbohrungen zur Aufnahme von Zentrierstiften versehen ist. Die Zentrierung wird jedoch besonders exakt, wenn an den freien Rändern der Außenstege der Führungsschiene und am oberen freien Rand des Mittelsteges jeweils eine Justierbohrung vorgesehen ist. Damit die Zentrierstifte in einfachster Weise eingesetzt werden können, ist vorgesehen, daß die Justierbohrungen mittels eines Längsschlitzes einseitig offen sind, derart, daß die Zentrierstifte rastend festlegbar sind. So ist es beispielsweise möglich, die Zentrierstifte von der Seite und von oben in die Justierbohrungen einzudrücken. Der durch den Längsschlitz gebildete Zentrierwinkel ist kleiner als 180°.

Zur einfachen Festlegung der Schläuche ist vorgesehen, daß der Mittelsteg der Führungsschiene an den den Außenstegen zugewandten Flächen mit jeweils einer offenen Rastnut versehen ist, in die an den Schläuchen angeformte Raststege eingeclipst sind. Dadurch entfallen zusätzliche Befestigungselemente. Außerdem sind die Schläuche über die gesamte Länge festgelegt.

Damit der Mittelsteg nicht extrem geschwächt wird, ist vorgesehen, daß die Rastnuten der beiden Seiten gegeneinander höhenversetzt sind, wobei jede Rastnut im gleichen Abstand zur gedachten Verbindung der Mittellängsachse der Prismenleisten steht.

Die Mittellängsachsen der Prismenleisten sind sinngemäß wie Systemachsen zu sehen, wodurch die Anordnung der die Führung und den Antrieb bildenden Bauteile bestimmt ist, wie noch später erläutert wird.

Eine konstruktiv einfache Gestaltung für jeden Laufwagen ergibt sich, wenn jeder Laufwagen eine in Richtung zur Führungsschiene offene Profilschiene aufweist, die mit äußeren Randstegen versehen ist, die senkrecht zu den Außenstegen der Führungsschiene stehen und in die senkrecht dazu stehende Lagerbolzen eingesetzt sind, auf denen die Laufrollen der Laufrollenanordnung derart frei drehbar gelagert sind, daß die Außenringe an den Prismenleisten der Führungsschiene abwälzbar sind.

Wenn die aus den einzelnen Profilschienen gebildete Führungsbahn nach einem räumlichen Koordinatensystem verläuft, ist vorgesehen, daß jede Profilschiene des Laufwagens zwei innerhalb der Außenstege der Führungsschiene sowie parallel und im Abstand zu den Außenstegen stehende Lagerstege aufweist, daß in Bohrungen der Lagerstege eingesetzte Lagerbolzen vorgesehen sind, auf deren den Außenstegen der Führungsschiene zugeordnete Enden Schwenklagerstege eines die Profilschiene übergreifenden U-Profilstückes oder eines Tisches drehbar gelagert sind und daß die Profilschiene im Übergangsbereich zwischen den Randstegen und dem mittleren Brückensteg Durchbrechungen aufweist, durch die die Schwenklagerstege hindurchgreifen.

Die Mittellängsachse der Lagerbolzen bilden die Bezugsebene für die Laufrollen der Laufrollenanordnungen, d. h. die Achsen liegen mittig zu den quer dazu stehenden Laufrollen. Die drehbare Lagerung der Schwenklagerstege ermöglicht, daß das U-Profilstück oder der Tisch um eine quer zur Längsrichtung der Führungsschiene stehende Achse kippbar ist. Diese Kippbewegung ist notwendig, um durch Bögen gebildete Höhenunterschiede der Führungsbahn zu überwinden. Sofern die Führungsbahn ausschließlich mit diesen Bögen versehen ist, können die Schwenklagerstege direkt an einem Tisch angeformt sein. Sofern jedoch die Führungsbahn nach einem räumlichen Koordinatensystem verläuft, muß außer dieser Kippbewegung der Tisch noch eine Drehbewegung durchführen. Dies wird durch das U-Profilstück ermöglicht, an dem der Tisch drehbar gelagert ist, wie noch erläutert wird.

Um die Kippbewegung reibungsmindernd zu ermöglichen, ist vorgesehen, daß die Mittelpunkte der Bohrungen für die Lagerbolzen auf Höhe der Mittellängsachse der Prismenleisten liegen. Sofern diese Prismenleisten im Querschnitt dreieckförmig ausgebildet sind, fallen diese Mittelpunkte höhenmäßig mit der äußeren Spitze zusammen. Um einen Ausgleich zwischen dem Führungs- und dem Antriebssystem zu ermöglichen, ist vorgesehen, daß an dem Brückensteg der Profilschiene eines Laufwagens an der der Führungsschiene zugewandten Seite mindestens ein ausschließlich quer zur Längsachse der Führungsschiene verfahrbarer Schieber angeordnet ist und daß in den Schieber ein Bolzen eingesetzt ist, auf den die den jeweiligen Schlauch quetschende Antriebsrolle frei drehbar gelagert ist.

Beidseitig des Mittelsteges der Führungsschiene liegt dann ein Schieber und somit auch eine Antriebsrolle. Diese beiden Antriebsrollen sind unabhängig voneinander quer zur Längsachse der Führungsschiene bewegbar.

Damit sich das Führungssystem gegenüber dem Tisch um eine senkrecht zur Tischfläche stehende Ebene verschieben kann, ist vorgesehen, daß der mittlere Flansch des U-Profilstückes die der Führungsschiene zugewandte, untere Seite des Tisches kontaktiert, und daß der mittlere Flansch und der Tisch mittels eines in Richtung des Mittelsteges der Führungsschiene verlaufenden Bolzens verbunden sind, dessen Längsachse mittig zwischen den Drehachsen der Antriebsrollen und über dem Mittelsteg der Führungsschiene liegt.

Das U-Profilstück ist sinngemäß wie eine Adapter zu sehen.

Es ergibt sich außerdem noch eine konstruktiv einfache Lösung, wenn zur Bildung einer Transporteinheit zwei Laufwagen im Abstand zueinander angeordnet und durch den Tisch miteinander verbunden sind. Das U-Profilstück bzw. der Adapter wäre dann Teil des Laufwagens.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung bevorzugter Ausführungsbeispiele.

Es zeigen:
- Figur 1:: einen räumlichen Aufbau der Führungsbahn des erfindungsgemäßen Transportsystems, rein schematisch,
- Figur 2:: die Führungsschiene in einer Ansicht, die Anordnung der Laufrollen und der flexiblen Schläuche für den Antrieb zeigend,
- Figur 3:: eine Draufsicht auf den Mittelsteg der Führungsschiene mit den seitlich angesetzten Schläuchen und die Laufrollen zeigend, rein schematisch,
- Figur 4:: eine erste Ausführung einer Transporteinheit im Querschnitt,
- Figur 5;: den Laufwagen in einem Teilquerschnitt,
- Figur 6:: eine zweite Ausführungsform der Transporteinheit im Schnitt,
- Figur 7:: die Profilschiene des Laufwagens in Draufsicht,
- Figur 7a:: die Profilschiene gemäß der Figur 7 im Querschnitt,
- Figur 7b:: die Profilschiene in einer Seitenansicht,
- Figur 8:: den Tisch für die Transporteinheit gemäß der Figur 4 in Draufsicht,
- Figur 8a:: den Tisch gemäß der Figur 8 im Querschnitt,
- Figur 9:: den Tisch für die Transporteinheit gemäß der Figur 6 in Draufsicht,
- Figur 9a:: den Tisch gemäß der Figur 9 im Querschnitt,
- Figur 10:: eine Transporteinheit, bei der jeder Laufwagen mit zwei Laufrollen ausgerüstet ist,
- Figur 10a:: die Transporteinheit gemäß der Figur 10, die Stellung der Laufwagen in einer Kurve zeigend,
- Figur 11:: eine Transporteinheit, bei der jeder Laufwagen mit vier Laufrollen ausgerüstet ist und

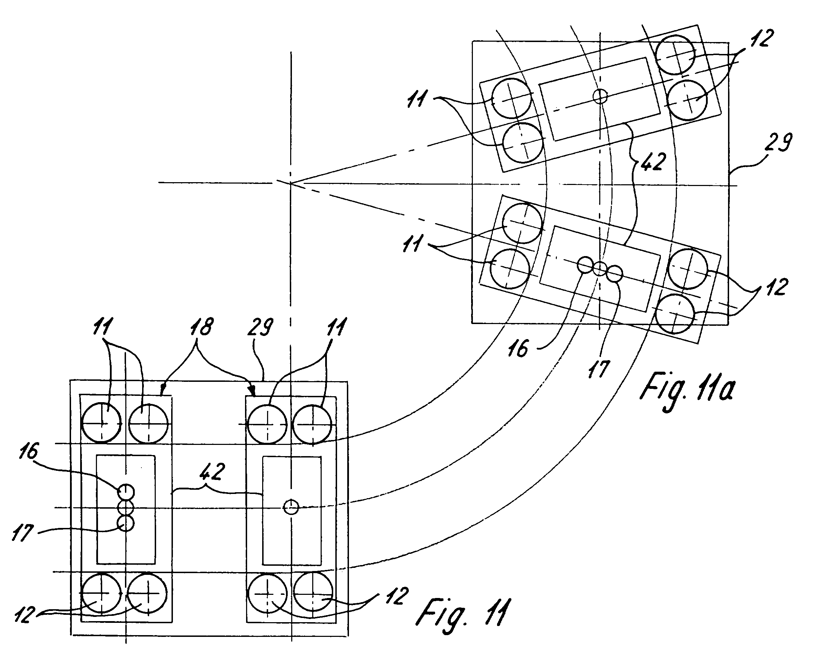

- Figur 11 a:: die Transporteinheit gemäß der Figur 11, die Stellung der Laufwagen bei einer Kurvenfahrt zeigend.

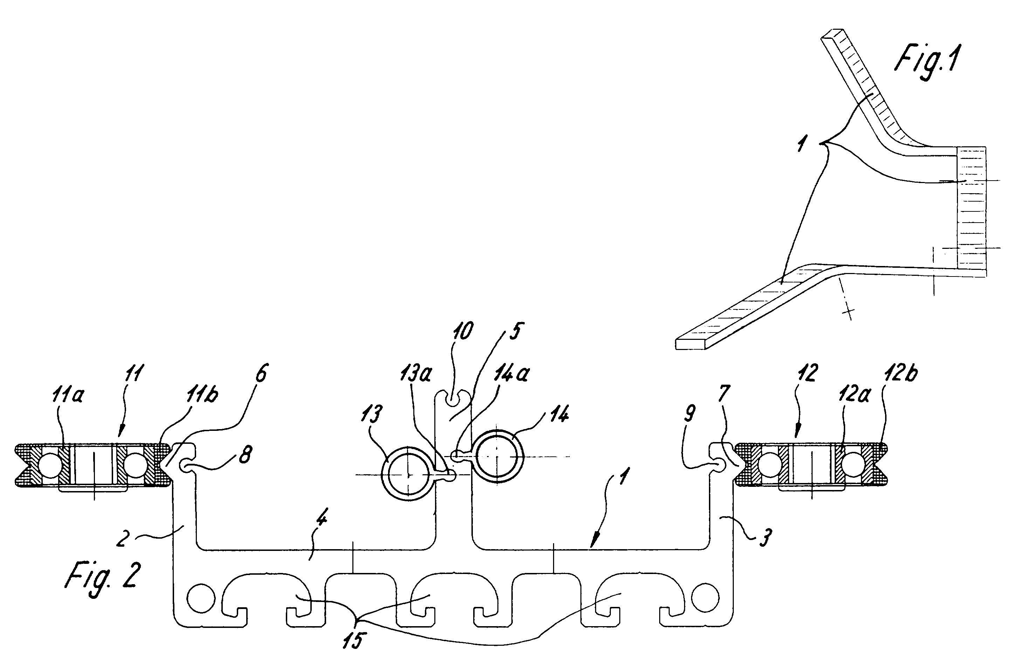

Durch die Fig. 1 soll dargestellt werden, daß aus mehreren Führungsschienen 1 eine Transportbahn für die noch näher erläuterten Transporteinheiten geschaffen werden kann. Die Fig. 1 zeigt, daß die Transportbahn nach einem räumlichen Koordinatensystem verläuft, so daß alle Stellen einer Produktionsstätte oder eines Lagers erreicht werden können. In der Praxis werden mehr als drei Führungsschienen für die Transportbahn benötigt. Der Verlauf der Transportbahn richtet sich nach den gegebenen Verhältnissen.

Die Fig. 2 zeigt die Führungsschiene in Ansicht. Sie besteht im wesentlichen aus zwei Außenstegen 2, 3, einen die Außenstege verbindenden Verbindungsschenkel 4 sowie einem mittig zwischen den beiden Außenstegen 2, 3 liegenden Mittelsteg 5, der rechtwinklig zum Verbindungsschenkel 4 steht und zu der gleichen Seite zeigt wie die Außenstege 2, 3. Die freie Kante des Mittelsteges 5 steht gegenüber den freien Kanten der Außenstege 2, 3 vor. An den Außenstegen 2, 3 sind im Querschnitt dreieckförmige Prismenleisten 6, 7 angeformt, die gegenüber den Außenflächen vorstehen und im oberen, dem Verbindungsschenkel 4 abgewandten Bereich liegen. An der Innenseite der Außenstege 2, 3 sind auf gleicher Höhe liegende Justierbohrungen 8, 9 vorgesehen. Eine weitere Justierbohrung 10 liegt im oberen freien Rand des Mittelsteges 5. Die Justierbohrungen 8, 9, 10 sind infolge eines Längsschlitzes einseitig offen, so daß nicht dargestellte Zentrierstifte zur Ausrichtung der aneinandergereihten Führungsschienen 1 einklipsbar sind. Die Prismenleisten 6,7 dienen zur Führung der Laufrollen 11, 12 einer Laufrollenanordnung. Die Laufrollen sind in noch näher erläuterter Weise auf parallel und im Abstand zu den Außenstegen 2, 3 stehenden Bolzen frei drehbar gelagert. Die Laufrollen 11, 12 bestehen aus jeweils einem Rillenkugellager 11a, 12a und einem drehfest auf den Außenring des jeweiligen Rillenkugellagers fest aufgesetzten Profilring 11b und 12b. Die Profilringe 11b, 12b sind entsprechend dem Querschnitt der Prismenleisten 6, 7 geformt, so daß sie formschlüssig miteinander im Eingriff stehen. An den den Außenstegen 2, 3 zugewandten Seiten sind zwei flexible Schläuche 13, 14 festgelegt. Dazu ist jeder Schlauch 13, 14 mit einem Raststeg 13a und 14a versehen, die in entsprechend gestaltete Nuten des Mittelsteges 5 eingeklipst sind. Wie Fig. 2 zeigt, sind die Raststege 13a, 14a höhenversetzt zueinander. Sie liegen jedoch im gleichen Abstand zu der gedachten Verbindungslinie der Mittellängsachsen der Prismenleisten 6, 7 bzw. der Justierbohrungen 8, 9. Der Verbindungsschenkel 5 der Führungsschiene 1 ist an der unteren, dem Mittelsteg 5 abgewandten Seite mit Systemnuten 15 ausgerüstet, um die Führungsschiene 1 auf einem Untergestell festzulegen.

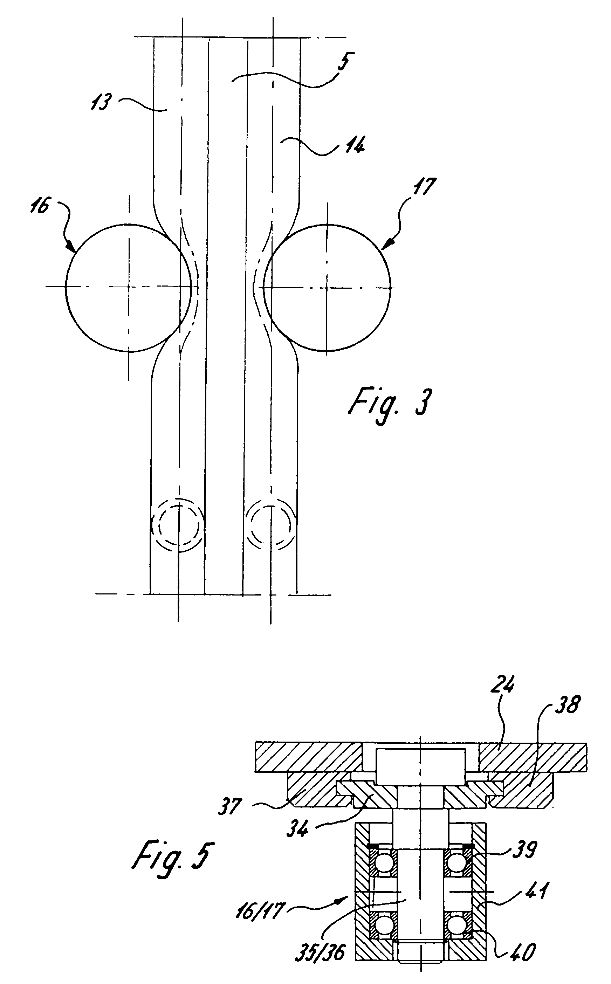

Die Fig. 3 zeigt, daß die Schläuche 13, 14 durch zwei in noch näher erläuterter Weise an einem Laufwagen der Transporteinheit drehbar gelagerte Antriebsrollen 16, 17 in einen flachen Zustand zusammengedrückt werden. Die Antriebsrollen 16, 17 sind in noch näher erläuterter Weise auf Bolzen frei drehbar gelagert. Aus der Fig. 3 ergibt sich, daß für den Fall, daß die durch die Antriebsrollen 16, 17 begrenzten Teilstücke der Schläuche 13, 14 mit Druck beaufschlagt werden, auf die Antriebsrollen 16, 17 eine Kraft einwirkt, die bewirkt, daß der Laufwagen bzw. die Transporteinheit längs der aus den Führungsschienen 1 gebildeten Führungsbahn verfahren wird. Das jeweils andere Teilstück des Schlauches 13 bzw. 14 kann drucklos oder mit einem geringeren Druck beaufschlagt werden. Durch entsprechende Steuermittel läßt sich die Geschwindigkeit des Laufwagens steuern. Außerdem erfolgt die Positionierung der Transporteinheit über die Steuerung.

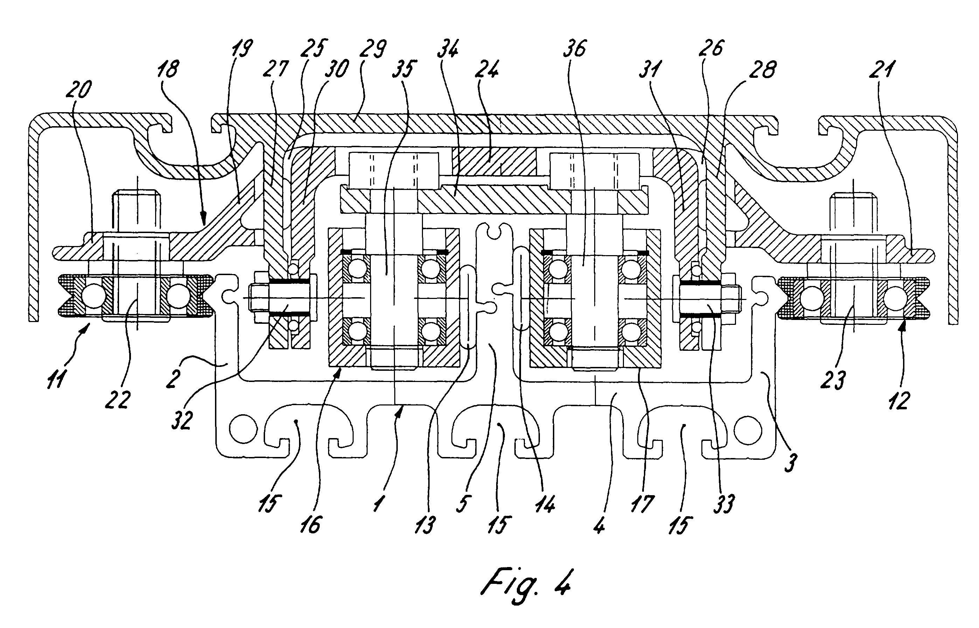

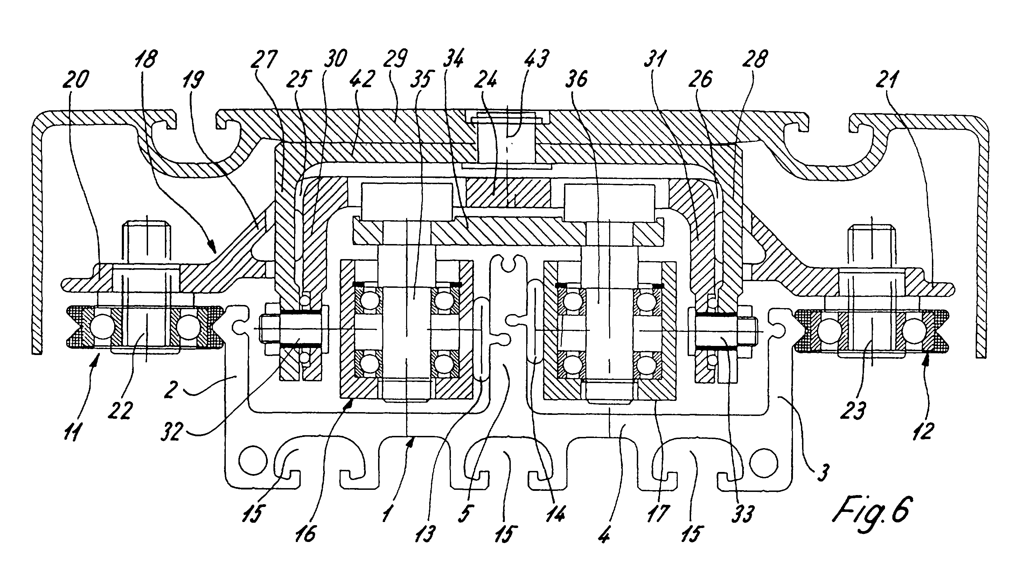

Die Fig. 4 zeigt eine Transporteinheit, die ausschließlich für eine Führungsbahn geeignet ist, die zur Überwindung von Höhenunterschieden mit Bögen ausgerüstet ist. Für diese Transporteinheit wird die in der Fig. 2 dargestellte Führungsschiene 1 verwendet. Die Transporteinheit besteht aus zwei im Abstand zueinander angeordneten Laufwagen 18.Der dem Druck beaufschlagbaren Teile der Schläuche 13, 14 zugewandte Laufwagen 18 ist mit den Antriebsrollen 16, 17 ausgerüstet. Der andere Laufwagen benötigt diese Antriebsrollen 16, 17 nicht. Jeder Laufwagen 18 ist mit einer Profilschiene 19 ausgerüstet. Diese Profilschiene ist mit äußeren Randstegen 20, 21 ausgerüstet, in die senkrecht dazu stehende Lagerbolzen 22, 23 fest eingesetzt sind. Wie noch später erläutert wird, können an jeder Seite ein oder zwei Lagerbolzen eingesetzt werden. Auf jeden Lagerbolzen 22, 23 ist eine Laufrolle 11, 12 frei drehbar gelagert, und zwar an der dem Verbindungsschenkel 4 zugewandten Seite der Führungsschiene 1. Die Randstege 20, 21 sind gegenüber dem mittleren Brückensteg 24 der Profilschiene 19 in Richtung zum Verbindungsschenkel 4 der Führungsschiene 1 versetzt. Die beiden Übergangsbereiche verlaufen schräg. In diesen Übergangsbereichen sind Durchbrechungen 25, 26 vorgesehen, durch die Schwenklagerstege 27, 28 hindurchgreifen. Bei dem Ausführungsbeispiel gemäß der Fig. 4 sind diese Schwenklagerstege 27, 28 an der Unterseite eines die Transporteinheit übergreifenden Tisches 29 angeformt. Wie noch erläutert, sind an jeder Seite zwei Schwenklagerstege 27, 28 vorgesehen. Die Profilschiene 19 ist ebenfalls mit Lagerstegen 30, 31 versehen, die in einem ganz geringen Abstand zu den Schwenklagerstegen 27, 28 stehen und zwar an der dem Mittelsteg 5 der Führungsschiene 1 zugewandten Seite. Außerdem stehen die Schwenklagerstege 27, 28 und die Lagerstege 30, 31 parallel und im Abstand zu den Außenstegen 2, 3 bzw. zum Mittelsteg 5. Dabei ist der Abstand zu den Außenstegen 2, 3 deutlich geringer als zum Mittelsteg 5. Auf Höhe der Mittellängsachsen der Prismenleisten 6, 7 sind die Schwenklagerstege 27, 28 und die Lagerstege 30, 31 mit korrespondierenden Bohrungen versehen, in die Bolzen 32, 33 so eingesetzt sind, daß sich der Tisch 29 gegenüber der Profilschiene 19 verdrehen kann, um die höhenmäßige Kurvenfahrt zu ermöglichen. Die Mittellängsachsen der Bolzen 32, 33 stehen rechtwinklig zu den Lagerbolzen 22, 23 und auch rechtwinklig zu den Drehachsen der Antriebsrollen 16, 17. Die Fig. 2 zeigt außerdem daß durch die gedachte Verbindungslinie der Mittellängsachsen der Bolzen 32, 33 die Antriebsrollen 16, 17 mittig geteilt werden. Durch den Tisch 29 werden die beiden im Abstand zueinander angeordneten Laufwagen 18 gekoppelt. Wie die Fig. 4 zeigt, sind die Antriebsrollen 16, 17 an einem Schieber 34 mittels Bolzen 35, 36 gelagert. Der Schieber 34 ist quer zum Mittelsteg 5 der Führungsschiene 1 verfahrbar, wie anhand der Fig. 5 noch näher erläutert wird. Dadurch ist ein Ausgleich des Antriebssystems zum Führungssystem der Transporteinheit gewährleistet.

Die Fig. 5 zeigt die quer verschiebbare Anordnung der Antriebsrollen 16, 17. Danach ist jeder Schieber 34 in zwei quer zum Mittelsteg 5 der Führungsschiene 1 stehenden Führungsleisten 37, 38 geführt, so daß die besagte Querverschiebung gewährleistet ist, und zwar unabhängig voneinander. Dazu sind die Führungsleisten 37, 38 an den einander zugewandten Seiten mit Führungsnuten versehen, in die Randstege des Schiebers 34 eingreifen. Der Schieber 34 ist in Längsrichtung der Führungsschiene 1 unverschieblich, wie aus der Fig. 5 deutlich zu erkennen ist. Jede Laufrolle 16, 17 besteht im wesentlichen aus zwei im Abstand zueinander angeordneten, auf die Bolzen 35, 36 aufgesetzten Rillenkugellagern 39, 40 und einem auf die Außenringe fest aufgesetzten, topfförmigen Außenring 41, der mittels eines Sicherungsringes gegen axiale Verschiebung gesichert ist.

Die Fig. 6 zeigt eine zweite Ausführungsform der Transporteinheit, die nicht nur durch Bögen hergestellte Höhenunterschiede überwinden kann, sondern auch sämtliche anderen Krümmungen. Dazu sind die Schwenklagerstege 27, 28 an einem Adapter in Form eines U-Profilstückes 42 angesetzt. Die Schwenklagerstege 27, 28 sind durch die parallelen Außenstege gebildet. Die Verbindung mit dem Tisch 29 erfolgt durch einen in fluchtenden Bohrungen eingesetzten Bolzen 43, der mittig zwischen den beiden Außenstegen 2, 3 der Führungsschiene 1 steht und dessen Mittellängsachse in vertikaler Richtung bzw. in der Richtung des Mittelsteges 5 der Profilschiene 1 verläuft. Der Bolzen 43 ist mittels eines Bundes und eines Sicherungsringes gegen axiale Verschiebung gesichert. Aus der Fig. 6 ergibt sich, daß dadurch der Tisch 29 gegenüber dem U-Profilstück 42 und somit auch gegenüber dem Laufwagen 18 verdrehbar ist.

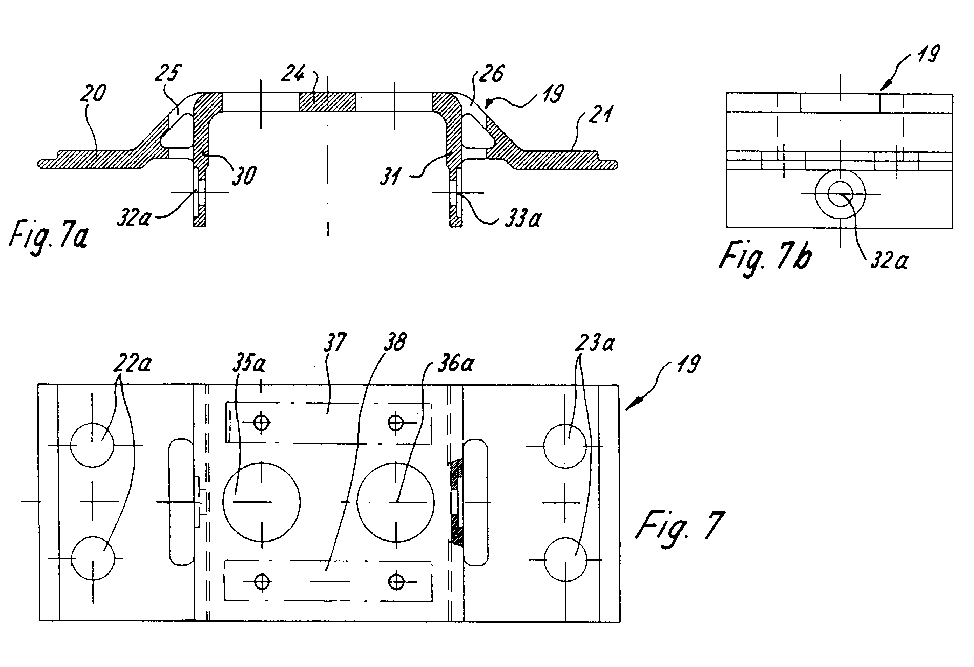

Die Fig. 7, 7a und 7b zeigen die Profilschiene 19 für die Laufwagen als Einzelheit in drei verschiedenen Ansichten. Daraus ist deutlich erkennbar, daß die Führungsleisten 37, 38 quer zum Mittelsteg 5 der Führungsschiene 1 stehen, so daß die bereits erwähnte Verfahrbarkeit der Antriebsrollen 16, 17 gewährleistet ist. Die Bohrungen zur Aufnahme der Bolzen 35, 36 sind durch die Bezugszeichen 35a und 36a gekennzeichnet. Die Bohrungen zur Aufnahme der Bolzen 32, 33 in den Lagerstegen 30, 31 sind durch die Bezugszeichen 32a und 33a gekennzeichnet, Schließlich sind noch die Bohrungen zur Aufnahme der Lagerbolzen 22 und 23 zur Lagerung der Laufrollen 11, 12 durch die Bezugszeichen 22a und 23a gekennzeichnet. In den Figuren ist die Ausführung dargestellt, bei der jeder Laufwagen mit vier Laufrollen ausgerüstet ist, die an beiden Seiten paarweise angeordnet sind. Die Laufrollen stehen dann in einem gleichen Abstand zu den Antriebsrollen 35, 36, wie insbesondere die Fig. 7 zeigt.

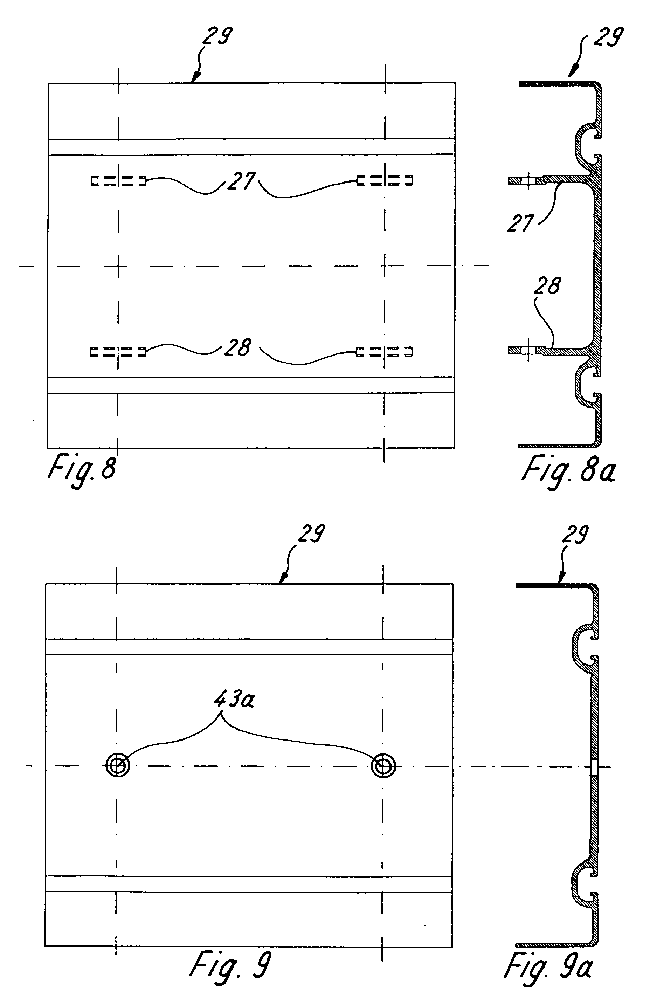

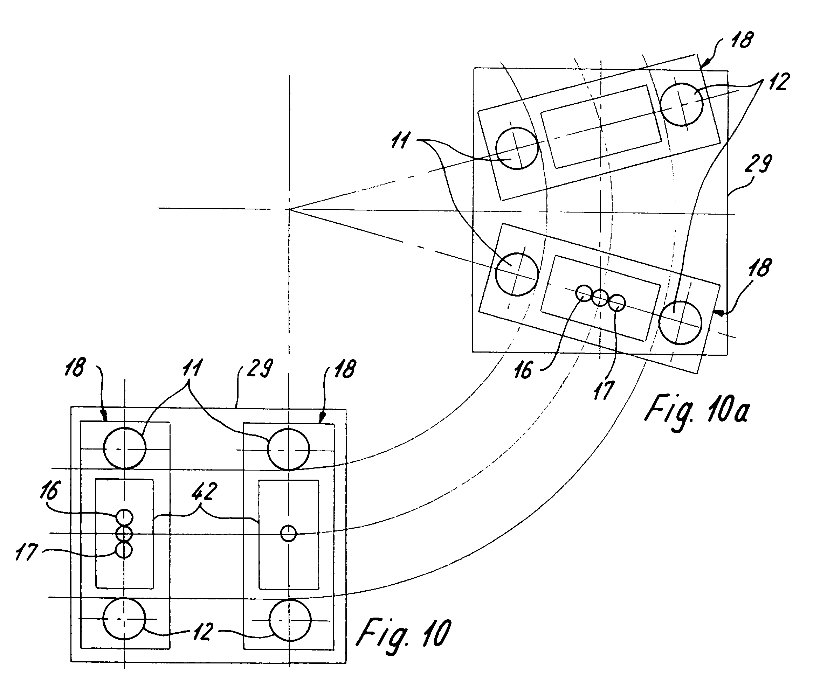

Die Fig. 8 und 8a zeigen den Tisch 29 für die Transporteinheit für die Fig. 4 als Einzelheit. Insbesondere zeigt die Fig. 8, daß an der unteren Seite des Tisches 29 vier Schwenklagerstege 27, 28 angeformt sind. Beidseitig des Mittelsteges 5 der Führungsschiene 1 liegen dann jeweils zwei Schwenklagerstege 27 und 28 im Abstand zueinander. Demzufolge muß auch die Profilschiene 19 mit vier Lagerstegen 30, 31 ausgerüstet sein. Außerdem zeigt diese Figur, daß jede Transporteinheit durch zwei Laufwagen 18 gebildet ist, die durch die Tischplatte 29 miteinander verbunden sind. Die Fig. 9 und 9a zeigen den Tisch für die Transporteinheit gemäß der Fig. 6. Es fehlen die Schwenklagerstege, da diese durch das U-Profilstück 42 gebildet werden. Die beiden im Abstand zueinander angeordneten Bohrungen für die Bolzen 43 sind durch die Bezugszeichen 43a gekennzeichnet. Die Fig. 10 und 10a zeigen die Anordnung bei einem bogenförmigen Verlauf einer durch die Führungsschienen 1 gebildeten Transportbahn, auf der sich eine aus zwei Laufwagen 18 gebildete Transporteinheit befindet. Die gezeigte Transporteinheit ist mit jeweils einer Laufrolle 11 bzw. 12 pro Seite des Laufwagens 18 ausgerüstet. Über das U-Profilstück 42 als Adapter sind horizontale Kurvenfahrten des Laufwagens 18 auszugleichen. Durch das U-Profilstück 42 wird außerdem die durch die Bolzen 32 und 33 definierte Schwenkachse gebildet. Die Figuren zeigen außerdem, daß nur die in Transportrichtung hinten liegenden Laufwagen 18 mit den Antriebsrollen 16, 17 ausgerüstet sind. Über die Bolzen 43 sind ebenfalls Schwenkachsen definiert, wodurch außerdem die U-Profilstücke 42 mit dem Tisch 29 verbunden sind. Die Fig. 11 zeigt die gleichen Laufwagen 18, jedoch mit einer Anordnung von zwei Laufrollen 11 bzw. 12 pro Seite eines Laufwagens 18. Die Schwenkachse für die beiden Laufrollen 11 bzw. 12 sind ebenfalls durch die durch die Bolzen 32 und 33 definierten Achsen bestimmt. Die Anordnung von zwei Laufrollen pro Seite des Laufwagens 18 ergibt bei horizontaler Kurvenfahrt ein stabileres Verhalten der einzelnen Laufwagen 18 und ist deshalb besonders vorteilhaft.

Die gezeigten Ausführungen gewährleisten einen äußerst reibungsgeminderten und störungsfreien Ablauf einer Transporteinheit auf einer räumlichen Führungsbahn. Dazu ist es notwendig, daß die Achsen der Antriebsrollen 16, 17 mit den resultierenden Achsen der Laufrollen 11, 12 in einer Flucht liegen, und daß sich die Achsen der Antriebsrollen 16, 17 auf dieser fluchtenden Ebene zwischen den beiden resultierenden Achsen der Laufrollen 11, 12 ausgleichend bewegen können.

## Patentansprüche

1. Transportsystem für Fertigungseinrichtungen, Lagereinrichtungen und dergleichen mit einer ortsfesten Führungsschiene (1) und einer darauf gesteuert verfahrbaren Transporteinheit, die im wesentlichen aus zwei im Abstand zueinander durch einen Tisch (29) verbundenen Laufwagen (18) besteht, wobei jeder Laufwagen (18) mit einer die Führungsschiene (1) kontaktierenden Laufrollenanordnung (11, 12) ausgerüstet ist, und mit einem Antrieb für die Transporteinheit, der im wesentlichen aus wenigstens einem an der Führungsschiene (1) festgelegten, druckbeaufschlagbaren und flexiblen Schlauch (13, 14) und einer jedem Schlauch (13, 14) zugeordneten, an einem Laufwagen (18) der Transporteinheit Frei drehbar gelagerten, den Schlauch (13, 14) dichtend abquetschenden Antriebsrolle (16, 17) besteht, **dadurch gekennzeichnet,** daß die Führungsschiene (1) nach einem räumlichen Koordinatensystem verläuft, U- oder C-förmig ausgebildet und abstandsgleich zu ihren beiden Außenstegen (2, 3) mit einem zur gleichen Seite gerichteten Mittelsteg (5) versehen ist, daß an beiden Seiten des Mittelsteges (5) jeweils ein druckbeaufschlagbarer Schlauch (13, 14) und jeweils eine Antriebsrolle (16, 17) vorgesehen sind und daß die Laufrollenanordnung eines Laufwagens (18) aus zwei Laufrollen (11, 12) besteht, die am Laufwagen (18) derart gelagert sind, daß die Drehachsen der Antriebsrollen (16, 17) in der gedachten Verbindungsebene der beiden Drehachsen der Laufrollen (11, 12) liegen, oder daß der Laufwagen (18) mit vier paarweise an beiden Längsseiten gelagerten Laufrollen (11, 12) ausgestattet ist und die Drehachsen der vorderen und hinteren Laufrollen (11, 12) im gleichen Versatz zu den Drehachsen der Antriebsrollen (16, 17) stehen.

2. Transportsystem nach Anspruch 1, **dadurch gekennzeichnet,** daß die Führungsschiene (1), bezogen auf die Mittellängsebene des Mittelsteges (5),symmetrisch ausgebildet ist.

3. Transportsystem nach Anspruch 1, **dadurch gekennzeichnet,** daß an dem die beiden Außenschenkel (2, 3) verbindenden Verbindungsschenkel (4) der Führungsschiene (1) an der dem Mittelsteg (5) abgewandten Seite sich in Längsrichtung erstreckende Systemnuten (15) zur Befestigung der Führungsschiene (1) auf einem Untergestell vorgesehen sind.

4. Transportsystem nach Anspruch 1, **dadurch gekennzeichnet,** daß an den freien Rändern der Außenstege (2, 3) der Führungsschiene (1) vorzugsweise an den Außenflächen in Längsrichtung der Führungsschiene (1) sich erstreckende Prismenleisten (6, 7) zur Führung der Laufwagen (18) angesetzt sind.

5. Transportsystem nach Anspruch 1, bei dem zur Bildung einer Führungsbahn die Führungsschienen (1) aneinandergereiht und miteinander verbunden sind, **dadurch gekennzeichnet,** daß jede Führungsschiene (1) zumindest in den Endbereichen mit mindestens zwei sich in Längsrichtung erstreckenden Justierbohrungen (8, 9) zur Aufnahme von Zentrierstiften versehen ist.

6. Transportsystem nach Anspruch 5, **dadurch gekennzeichnet,** daß an den freien Rändern der Außenstege (2, 3) der Führungsschiene (1) an den Innenseiten und am oberen freien Rand des Mittelsteges (5) jeweils eine Justierbohrung (8, 9, 10) vorgesehen ist.

7. Transportsystem nach Anspruch 5, **dadurch gekennzeichnet,** daß die Justierbohrungen (8, 9, 10) mittels eines Längsschlitzes derart einseitig offen sind, daß die Zentrierstifte rastend einsetzbar sind.

8. Transportsystem nach Anspruch 1, **dadurch gekennzeichnet,** daß der Mittelsteg (5) der Führungsschiene (1) an den den Außenstegen (2, 3) zugewandten Flächen mit jeweils einer offenen Rastnut versehen ist, in die an den Schläuchen (13, 14) angeformte Raststege (13a, 14a) eingeclipst sind.

9. Transportsystem nach Anspruch 4 und 8, **dadurch gekennzeichnet,** daß die Rastnuten der beiden Seiten des Mittelsteges (5) gegeneinander höhenversetzt sind, wobei jede Rastnut im gleichen Abstand zur gedachten Verbindung der Mittellängsachse der Prismenleisten (6, 7) steht.

10. Transportsystem nach Anspruch 4, **dadurch gekennzeichnet,** daß jeder Laufwagen (18) eine in Richtung zur Führungsschiene (1) offene Profilschiene (19) aufweist, die mit äußeren Randstegen (20, 21) versehen ist, die senkrecht zu den Außenstegen (2, 3) der Führungsschiene (1) stehen und in die senkrecht dazu stehende Lagerbolzen (22, 23) eingesetzt sind, auf denen die Laufrollen (11, 12) der Laufrollenanordnung frei drehbar gelagert sind, deren Profilringe (11b, 12b) an den Prismenleisten (6, 7) der Führungsschiene (1) abwälzbar sind.

11. Transportsystem nach Anspruch 10, **dadurch gekennzeichnet,** daß jede Profilschiene (19) des Laufwagens (18) zwei innerhalb der Außenstege (2, 3) der Führungsschiene (1) sowie parallel und im Abstand zu den Außenstegen (2, 3) stehende Lagerstege (30, 3) aufweist, daß in Bohrungen (32a, 33a) der Lagerstege (30, 31) eingesetzte Bolzen (32, 33) vorgesehen sind, auf deren den Außenstegen (2, 3) der Führungsschiene (1) zugeordneten Enden Schwenklagerstege (27, 28) eines die Profilschiene (19) übergreifenden U-Profilstückes (42) oder eines Tisches (29) drehbar gelagert sind, und daß die Profilschiene (19) im Übergangsbereich zwischen den Lagerstegen (30, 31) und dem mittleren Brükkensteg (24) Durchbrechungen (25, 26) aufweist, durch die die Schwenklagerstege (27, 28) hindurchgreifen.

12. Transportsystem nach Anspruch 11, **dadurch gekennzeichnet,** daß die Mittelpunkte der Bohrungen (32a, 33a) auf Höhe der Mittellängsachsen der Prismenleisten (6, 7) liegen.

13. Transportsystem nach Anspruch 11 oder 12, **dadurch gekennzeichnet,** daß an dem Brückensteg (24) der Profilschiene (19) eines Laufwagens (18) an der der Führungsschiene (1) zugewandten Seite mindestens ein ausschließlich quer zur Längsachse der Führungsschiene (1) verfahrbarer Schieber (34) angeordnet ist, und daß in den Schieber (34) Bolzen (35, 36) eingesetzt sind, auf denen die die Schläuche (13, 14) quetschenden Antriebsrollen (16, 17) frei drehbar gelagert sind.

14. Transportsystem nach Anspruch 1, **dadurch gekennzeichnet,** daß jede Antriebsrolle im wesentlichen aus zwei im Abstand zueinander angeordneten Rillenkugellagern (39, 40) und einem diese übergreifenden, gegen axiale Verschiebung gesicherten Außenring (41) besteht.

15. Transportsystem nach Anspruch 13, **dadurch gekennzeichnet,** daß der Schieber in zwei parallel und im Abstand zueinander angeordneten, quer zum Mittelsteg (5) der Führungsschiene (1) stehenden Führungsleisten (37, 38) verschiebbar geführt ist.

16. Transportsystem nach Anspruch 13, **dadurch gekennzeichnet,** daß der mittlere Flansch des U-Profilstückes (42) die der Führungsschiene (1) zugewandte Seite des Tisches (29) kontaktiert, und daß der mittlere Flansch und der Tisch mittels eines in Richtung des Mittlsteges (5) der Führungsschiene (1) verlaufenden Bolzens (43) verbunden sind, dessen Längsachse mittig zwischen den Drehachsen der Antriebsrollen (16, 17) und über den Mittelsteg (5) der Führungsschiene (1) liegt.

17. Transportsystem nach einem oder mehreren der vorhergehenden Ansprüche, **dadurch gekennzeichnet,** daß zur Bildung einer Transporteinheit zwei Laufwagen (18) im Abstand zueinander angeordnet und durch den Tisch (29) miteinander verbunden sind.

## Claims

1. Transport system for production devices, storage devices and the like, having a stationary guide rail (1) and a transport unit which is conveyable thereon in a controlled manner and which substantially comprises two running carriages (18) which are connected by a table (29) in such a manner that they are spaced from one another, each running carriage (18) being equipped with a running roller arrangement (11, 12) contacting the guide rail (1), and having a drive for the transport unit, which drive substantially comprises at least one pressurisable and flexible hose (13, 14) fixed to the guide rail (1), and a drive roller (16, 17) which is associated with each hose (13, 14), is supported to be freely rotatable on a running carriage (18) of the transport unit, and sealingly squeezes the hose (13, 14), characterised in that the guide rail (1) runs in accordance with a spatial coordinate system, is U- or C-shaped and is provided with a central web (5) which is spaced identically relative to the rail's two outer webs (2, 3) and which is directed to the same side, in that a respective pressurisable hose (13, 14) and a respective drive roller (16, 17) are provided on each side of the central web (5), and in that the running roller arrangement of a running carriage (18) comprises two running rollers (11, 12) which are supported on the running carriage (18) in such a manner that the axes of rotation of the drive rollers (16, 17) lie in the imaginary connecting plane of the two axes of rotation of the running rollers (11, 12), or that the running carriage (18) is equipped with four running rollers (11, 12) supported in pairs on the two longitudinal sides and the axes of rotation of the front and rear running rollers (11, 12) are offset to the same degree relative to the axes of rotation of the drive rollers (16, 17).

2. Transport system according to claim 1, characterised in that the guide rail (1) is in a symmetrical form relative to the central longitudinal plane of the central web (5).

3. Transport system according to claim 1, characterised in that system grooves (15) extending in the longitudinal direction for securing the guide rail (1) to an underframe are provided, on the side remote from the central web (5), on the connecting limb (4) of the guide rail (1), which limb connects the two outer limbs (2, 3).

4. Transport system according to claim 1, characterised in that prismatic strips (6, 7) extending in the longitudinal direction of the guide rail (1) and used for guiding the running carriages (18) are placed on the free edges of the outer webs (2, 3) of the guide rail (1), preferably on the outer faces.

5. Transport system according to claim 1, in which, in order to form a guide track, the guide rails (1) are lined up with one another and connected to one another, characterised in that each guide rail (1) is provided, at least in the end regions, with at least two longitudinally extending adjusting bores (8, 9) for receiving centring pins.

6. Transport system according to claim 5, characterised in that a respective adjusting bore (8, 9, 10) is provided on the inside of each of the free edges of the outer webs (2, 3) of the guide rail (1), and on the upper free edge of the central web (5).

7. Transport system according to claim 5, characterised in that the adjusting bores (8, 9, 10) are open on one side by means of a longitudinal slot in such a manner that the centring pins are insertable in a locking manner.

8. Transport system according to claim 1, characterised in that the central web (5) of the guide rail (1) is provided, on each of the faces facing the outer webs (2, 3), with a respective open locking groove into which locking webs (13a, 14a) formed integrally on the hoses (13, 14) can be snapped.

9. Transport system according to claims 4 and 8, characterised in that the locking grooves of the two sides of the central web (5) are offset relative to one another in terms of height, each locking groove being at the same distance from the imaginary connection of the central longitudinal axis of the prismatic strips (6, 7).

10. Transport system according to claim 4, characterised in that each running carriage (18) has a channel (19) which is open in the direction towards the guide rail (1) and which is provided with outer edge webs (20, 21) which are perpendicular to the outer webs (2, 3) of the guide rail (1) and into which are inserted bearing bolts (22, 23) which are perpendicular thereto and on which the running rollers (11, 12) of the running roller arrangement are supported in a freely rotatable manner, the sectional rings (llb, 12b) of which rollers can be rolled along the prismatic strips (6, 7) of the guide rail (1).

11. Transport system according to claim 10, characterised in that each channel (19) of the running carriage (18) has two bearing webs (30, 3) which are arranged inside the outer webs (2, 3) of the guide rail (1) and are parallel to and spaced from the outer webs (2, 3), in that bolts (32, 33) inserted into bores (32a, 33a) of the bearing webs (30, 31) are provided on whose ends associated with the outer webs (2, 3) of the guide rail (1) are rotatably supported pivot bearing webs (27, 28) of a U-shaped channel piece (42) engaging over the channel (19) or of a table (29), and in that the channel (19) has, in the transitional region between the bearing webs (30, 31) and the central bridge web (24), openings (25, 26) through which the pivot bearing webs (27, 28) extend.

12. Transport system according to claim 11, characterised in that the central points of the bores (32a, 33a) are arranged at the level of the central longitudinal axes of the prismatic strips (6, 7).

13. Transport system according to claim 11 or 12, characterised in that at least one slide (34) movable exclusively transversely relative to the longitudinal axis of the guide rail (1) is arranged on the bridge web (24) of the channel (19) of a running carriage (18), on the side facing the guide rail (1), and in that bolts (35, 36) on which the drive rollers (16, 17) squeezing the hoses (13, 14) are supported in a freely rotatable manner are inserted in the slide (34).

14. Transport system according to claim 1, characterised in that each drive roller substantially comprises two grooved ball bearings (39, 40) arranged at a distance from one another, and an outer ring (41) secured against axial displacement which engages over those ball bearings.

15. Transport system according to claim 13, characterised in that the slide is guided displaceably in two guide strips (37, 38) which are arranged parallel to and spaced from one another and which stand transversely to the central web (5) of the guide rail (1).

16. Transport system according to claim 13, characterised in that the central flange of the U-shaped channel piece (42) contacts that side of the table (29) which faces the guide rail (1), and in that the central flange and the table are connected by a bolt (43) which extends in the direction of the central web (5) of the guide rail (1) and the longitudinal axis of which lies centrally between the axes of rotation of the drive rollers (16, 17) and over the central web (5) of the guide rail (1).

17. Transport system according to one or more of the preceding claims, characterised in that, in order to form a transport unit, two running carriages (18) are arranged at a distance from one another and are connected to one another by the table (29).

## Revendications

1. Système de transport pour installations de fabrication, installations de stockage et similaires, comportant un rail de guidage (1) stationnaire et une unité de transport déplaçable sur celui-ci, de manière commandée, qui est essentiellement constituée de deux chariots (18) situés à distance l'un de l'autre et reliés par une table (29), dans lequel chaque chariot (18) est équipé d'un dispositif à roues de roulement (11, 12), en contact avec le rail de guidage (1), et d'un dispositif d'entraînement pour l'unité de transport qui est essentiellement constitué d'au moins un tuyau (13, 14) pouvant être soumis à une pression et flexible, fixé au rail de guidage (1), et d'un galet d'entraînement (16, 17) affecté à chaque tuyau (13, 14), monté tournant sur un chariot (18) de l'unité de transport et obturant le tuyau (13,14) de manière étanche en l'écrasant, **caractérisé en ce que** le rail de guidage (1) s'étend suivant un système de coordonnées spatiales, présente une forme en U ou en C et est pourvu, à même distance de ses deux ailes extérieures (2, 3), d'une aile centrale (5) orientée vers le même côté, en ce qu'il est prévu sur chacun des deux côtés de l'aile centrale (5) un tuyau (13, 14) pouvant être soumis à une pression et un galet d'entraînement (16, 17), et en ce que le dispositif à roues de roulement d'un chariot (18) est constitué de deux roues de roulement (11, 12) qui sont montées sur le chariot (18) de manière que les axes de rotation des galets d'entraînement (16, 17) se situent dans le plan de liaison imaginaire des deux axes de rotation des roues de roulement (11, 12), ou en ce que le chariot (18) est équipé de quatre roues de roulement (11, 12) montées par paires sur les deux côtés longitudinaux, et les axes de rotation des roues de roulement (11, 12) avant et arrière sont décalés de la même manière par rapport aux axes de rotation des galets d'entraînement (16, 17).

2. Système de transport selon la revendication 1, caractérisé en ce que le rail de guidage (1) est symétrique par rapport au plan longitudinal médian de l'aile centrale (5).

3. Système de transport selon la revendication 1, caractérisé en ce que sur la partie de liaison (4) du rail de guidage (1), qui relie les deux ailes extérieures (2, 3), sur le côté tourné à l'opposé de l'aile centrale (5), sont prévues des rainures (15) du système qui s'étendent dans la direction longitudinale, en vue de la fixation du rail de guidage (1) sur un bâti.

4. Système de transport selon la revendication 1, caractérisé en ce que des nervures prismatiques (6, 7) qui s'étendent dans la direction longitudinale du rail de guidage (1) sont prévues sur les bords libres des ailes extérieures (2, 3) du rail de guidage (1), de préférence sur les surfaces extérieures, en vue du guidage des chariots (18).

5. Système de transport selon la revendication 1, dans lequel, pour former une voie de guidage, les rails de guidage (1) sont juxtaposés et reliés entre eux, caractérisé en ce que chaque rail de guidage (1) est pourvu, au moins dans ses zones terminales, d'au moins deux perçages d'ajustement (8, 9) s'étendant dans la direction longitudinale, destinés à recevoir des doigts de centrage.

6. Système de transport selon la revendication 5, caractérisé en ce qu'un perçage d'ajustement (8, 9, 10) est prévu sur chacun des bords libres des ailes extérieures (2, 3) du rail de guidage (1), sur chacun des côtés intérieurs et sur le bord libre supérieur de l'aile centrale (5).

7. Système de transport selon la revendication 5, caractérisé en ce que les perçages d'ajustement (8, 9, 10) sont ouverts d'un côté, au moyen d'une fente longitudinale, de manière que les doigts de centrage puissent être insérés par enclenchement.

8. Système de transport selon la revendication 1, caractérisé en ce que l'aile centrale (5) du rail de guidage (1) est pourvue sur chacune de ses surfaces tournées vers les ailes extérieures (2, 3), de rainures d'encliquetage ouvertes à l'intérieur desquelles des nervures d'encliquetage (13a, 14a), formées sur les tuyaux (13, 14), sont clipsées.

9. Système de transport selon les revendications 4 et 8, caractérisé en ce que les rainures d'encliquetage prévues des deux côtés de l'aile centrale (5) sont décalées en hauteur l'une par rapport à l'autre, chaque rainure d'encliquetage se trouvant à même distance de la liaison imaginaire de l'axe longitudinal central des nervures prismatiques (6, 7).

10. Système de transport selon la revendication 4, caractérisé en ce que chaque chariot (18) présente un rail profilé (19), ouvert dans la direction du rail de guidage (1) et qui est pourvu d'ailes de bordure (20, 21) extérieures qui sont perpendiculaires aux ailes extérieures (2, 3) du rail de guidage (1) et dans lesquelles sont insérés des tourillons (22, 23), perpendiculaires à ces ailes extérieures, tourillons sur lesquels les roues de roulement (11, 12) du dispositif à roues de roulement sont montées de manière à pouvoir tourner librement et dont les bagues profilées (11b, 12b) peuvent rouler sur les nervures prismatiques (6, 7) du rail de guidage (1).

11. Système de transport selon la revendication 10, caractérisé en ce que chaque rail profilé (19) du chariot (18) comporte deux ailes de palier (30, 31) situées à l'intérieur des ailes extérieures (2, 3) du rail de guidage (1) et qui sont parallèles aux ailes extérieures (2, 3) et situées à distance de celles-ci, en ce que des axes (32, 33) sont montés dans des perçages (32a, 33a) des ailes de palier (30, 31), sur les extrémités desquels, correspondant aux ailes extérieures (2, 3) du rail de guidage (1), sont montées tournantes des ailes de palier de pivotement (27, 28) d'une pièce profilée en U (42), passant sur le rail de guidage (19) ou d'une table (29), et en ce que le rail profilé (19) présente, dans la zone de transition entre les ailes de palier (30, 31) et l'aile de liaison centrale (24), des ajours (25, 26) à travers lesquels passent les ailes de palier de pivotement (27, 28).

12. Système de transport selon la revendication 11, caractérisé en ce que les centres des perçages (32a, 33a) se situent à hauteur des axes longitudinaux médians des nervures prismatiques (6,7).

13. Système de transport selon la revendication 11 ou 12, caractérisé en ce que sur l'aile de liaison (24) du rail profilé (19) d'un chariot (18), sur le côté tourné vers le rail de guidage (1), est disposé au moins un coulisseau (34) déplaçable exclusivement perpendiculairement à l'axe longitudinal du rail de guidage (1), et en ce que dans le coulisseau (34) sont insérés des axes (35, 36) sur lesquels les galets d'entraînement (16, 17), écrasant les tuyaux (13, 14), sont montés de manière à pouvoir tourner librement.

14. Système de transport selon la revendication 1, caractérisé en ce que chaque galet d'entraînement est essentiellement constitué de deux roulements rainurés à billes (39, 40), espacés l'un de l'autre et d'une bague extérieure (41) passant sur ceux-ci et bloquée contre un déplacement axial.

15. Système de transport selon la revendication 13, caractérisé en ce que le coulisseau est guidé de manière à pouvoir coulisser dans deux nervures de guidage (37, 38) espacées l'une de l'autre et parallèles, s'étendant perpendiculairement à l'aile centrale (5) du rail de guidage (1).

16. Système de transport selon la revendication 13, caractérisé en ce que l'âme centrale de la pièce profilée en U (42) est en contact avec le côté de la table (29) tourné vers le rail de guidage (1), et en ce que l'âme centrale et la table sont reliées au moyen d'un pivot (43) s'étendant dans la direction de l'aile centrale (5) du rail de guidage (1), pivot dont l'axe longitudinal se situe à mi-distance des axes de rotation des galets d'entraînement (16, 17) et au-dessus de l'aile centrale (5) du rail de guidage (1).

17. Système de transport selon une ou plusieurs des revendications précédentes, caractérisé en ce que pour former une unité de transport, deux chariots (18) sont disposés à distance l'un de l'autre et sont reliés entre eux par la table (29).
